# EUROPEAN PATENT SPECIFICATION

(11) **EP 3 900 539 B1**
(45) Date of publication and mention of the grant of the patent: **10.08.2022**
(21) Application number: 20170291.7
(22) Date of filing: 20.04.2020
(51) Int. Cl.: A21B 3/02, F24C 15/02

(54) **COOKING OVEN WITH DOOR HANDLE PROVIDED WITH A SYSTEM FOR SELF-LOCKING IN THE OPEN POSITION**
BACKOFEN MIT EINEM TÜRGRIFF VERSEHEN MIT EINEM SYSTEM ZUR SELBSTVERRIEGELUNG IN DER OFFENEN POSITION
FOUR DE CUISSON COMPORTANT UNE POIGNÉE DE PORTE DOTÉE D'UN SYSTÈME DE VERROUILLAGE AUTOMATIQUE EN POSITION OUVERTE

(43) Date of publication of application: 27.10.2021
(73) Proprietor: Bonferraro S.p.A., 37060 Bonferraro (VR) (IT)
(72) Inventor: BICEGO, Luca, 37060 Bonferraro di Sorgà (VR) (IT); GASTALDELLI, Lucio, 46037 Roncoferraro (MN) (IT); RIGHETTI, Marco, 46032 Castelbelforte (MN) (IT); TOSI, Mauro, 37051 Bovolone (VR) (IT)
(74) Representative: Concone, Emanuele

(56) References cited:
- EP-A1- 1 111 175
- EP-A1- 3 489 439
- DE-U1-202007 014 649
- DE-U1-202013 100 851
- ES-A1- 2 340 454

## Description

This invention concerns ovens for cooking food or semi-finished food products, typically professional ovens that also perform steam cooking, and in particular an oven equipped with a system integrated in the door closing mechanism so that when the door is opened the door handle remains locked in the open position

Prior art document EP 1 111 175 A1 reveals a cooking oven with a cooking chamber closed by a door on which there is rotatably mounted a handle fixed the door and with a substantially T-shaped hook which is fixed horizontally on the body and wherein the T-shaped hook is engaged by a component of the handle.

Therefore, it is well known that professional ovens, and also some domestic ovens, in order to ensure the sealing of the door on the cooking chamber include a gasket arranged along the perimeter of the muffle mouth. This sealing must be guaranteed, in particular, when steam cooking is carried out in the oven and in the presence of automatic muffle washing systems.

To this purpose, the safest system is to adopt a closing mechanism with a T-hook that protrudes horizontally from the oven body and is inserted into a mandrel, located on the door, through a corresponding opening. Inside the mandrel, adjacent to said opening, there is a helical cam which is engaged by the head of the T-hook when the handle is rotated during the door closure step, so as to obtain a progressive retraction which guarantees adequate compression of the aforementioned perimeter gasket by the door.

This well-known mechanism works well but has the disadvantage of requiring a perfect alignment of the male/female coupling between the fixed hook on the oven body and the opening of the mandrel that rotates with the handle. In fact, in case the hook and the opening are not aligned due to a rotation, even small, of the handle while the door is open, if the user does not notice this misalignment and closes the door with a certain amount of energy he can damage the closing mechanism and/or other components of the door. Usually the damage consists in the bending of the hook, and in any case the whole door suffers a shock not dampened and obviously harmful to its components such as glass, electronics, etc.

The object of the present invention is therefore to provide an oven that is free from the above-described drawbacks. This object is achieved by means of an oven equipped with a system integrated in the door closing mechanism that automatically locks the handle in the open position and is unlocked only after the hook is correctly inserted in the corresponding mandrel opening. Further advantageous features are recited in the dependent claims.

The obvious advantage of the present oven is therefore that it avoids damage to the hook/mandrel mechanism in any case by making it impossible to turn the handle inadvertently when the door is open, thus also safeguarding the other door components and improving the ergonomics of use by the user and the reliability of the oven's operation over time.

A second significant advantage of this oven is that the above-mentioned object is achieved by adding three simple components inside the mandrel and internally modifying the body of the mandrel and of the mandrel-holding bracket, as illustrated below. As a result, the cost increase compared to a traditional mechanism is negligible, and certainly much lower than the cost of replacing a component damaged by a wrong closure.

Another advantage of the above-mentioned oven stems from the fact that this solution is also applicable as an upgrade of existing ovens, since the external profile of the mandrel body and of the corresponding bracket remain unchanged, whereby it is possible to replace these two parts with the new self-locking version.

Further advantages and characteristics of the oven according to the present invention will be evident to those skilled in the art from the following detailed description of a non-limiting embodiment thereof with reference to the attached drawings, wherein:

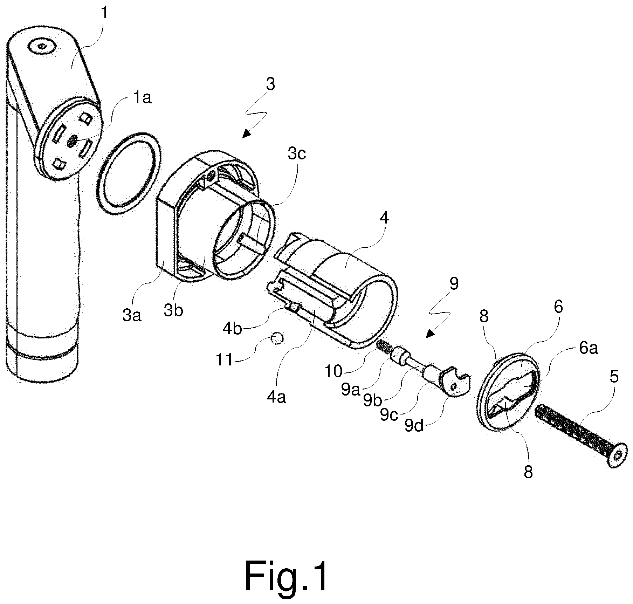

Fig.1 is an exploded perspective view of the locking mechanism components mounted on the oven door, with the mandrel body depicted in a longitudinal cut-away section;
Fig.2 is a frontal perspective view of the mechanism in the closed position, with some external components represented in a longitudinal cut-away section in order to show the arrangement of the internal components;
Fig.3 is a view similar to Fig.2 but with the mechanism in the open position and the hook disengaged from the mandrel; and
Fig.4 is a view similar to Fig.3 but in a rear perspective.

Referring to the above figures, there is seen that an oven according to the invention traditionally includes a substantially L-shaped handle 1 which is rotatably mounted on the cooking chamber door (not shown) by means of a connecting plate 2, to which a bracket 3 is fixed consisting of an external flange 3a and a sleeve 3b which extends inside the door. The proximal end of handle 1, i.e. the one closest to the oven body, is received in flange 3a, while a cylindrical mandrel body 4 is partially received in sleeve 3b and fixed to handle 1 by means of a screw 5 which is screwed into a threaded hole 1a of handle 1. In this way, body 4 and handle 1 are restrained and rotate together with respect to bracket 3 fixed on the door when opening and closing the door.

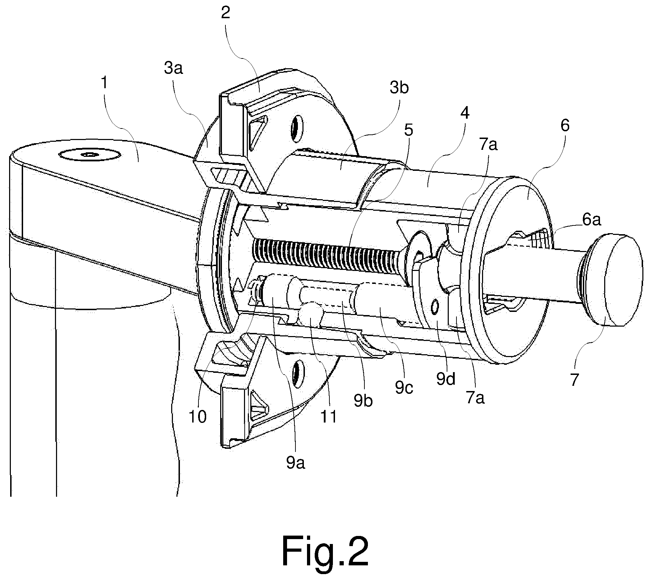

The proximal end of the cylindrical body 4 is closed by a corresponding base 6, integral thereto, which has a central opening 6a configured to receive the head of a substantially T-shaped hook 7 which is fixed horizontally to the oven body (not shown). The distal face of base 6 is also provided with a helical cam adjacent to opening 6a, said cam preferably consisting of a pair of opposing ramps 8 each of which extends over an arc of approximately 90° and is fitted with a seat 8a, at the end of an inclined plane 8b, in which it receives one of the arms 7a of the head of hook 7. In this way, the closed position of Fig.2 is solidly maintained, with the perimeter gasket adequately compressed, until handle 1 is rotated by about 90° with sufficient force to disengage from seats 8a the arms 7a, which descending along the inclined planes 8b align with opening 6a allowing the disengagement of hook 7 and the opening of the door.

The innovative aspect of the present oven, as mentioned above, lies in the presence inside the closing mechanism of a system that automatically locks handle 1 in the open position when the oven door is opened. To this purpose, inside the distal portion of the mandrel body 4 there is a longitudinal seat 4a in which a slider 9 is slidingly pushed towards base 6 by a spring 10, and a locking ball 11 is arranged in a hole 4b formed in correspondence of said seat 4a. The ball 11 is sized to protrude inside seat 4a until the rotation of the mandrel causes hole 4b to align with a longitudinal groove 3c formed on the internal surface of sleeve 3b in which the cylindrical body 4 rotates, the depth of said groove 3c being such as to partially receive ball 11 so that it no longer protrudes into seat 4a.

Slider 9 is shaped so as to have a first distal cylindrical portion 9a, with a diameter substantially equal to the diameter of seat 4a, connected through a conical surface to an intermediate portion 9b, with a diameter sufficiently reduced to allow ball 11 to protrude into seat 4a. Said portion 9b is in turn connected to a second proximal cylindrical portion 9c, of the same diameter as the first portion 9a, which ends with a proximal head 9d extending in a transverse plane along an arc of approximately 90° centered on the longitudinal axis of slider 9.

In the light of the description above, the simple and effective operation of the present locking mechanism with self-locking function of the handle is readily understandable.

When the oven door is closed (Fig.2), the head of hook 7 is inside the mandrel body 4, with arms 7a engaged in seats 8a and opening 6a rotated about 90° with respect to the alignment position with arms 7a. In this condition, hook 7 pushes on head 9d of slider 9 thus compressing spring 10, so that the intermediate portion 9b of reduced diameter is located in correspondence of hole 4b and ball 11 protrudes inside seat 4a.

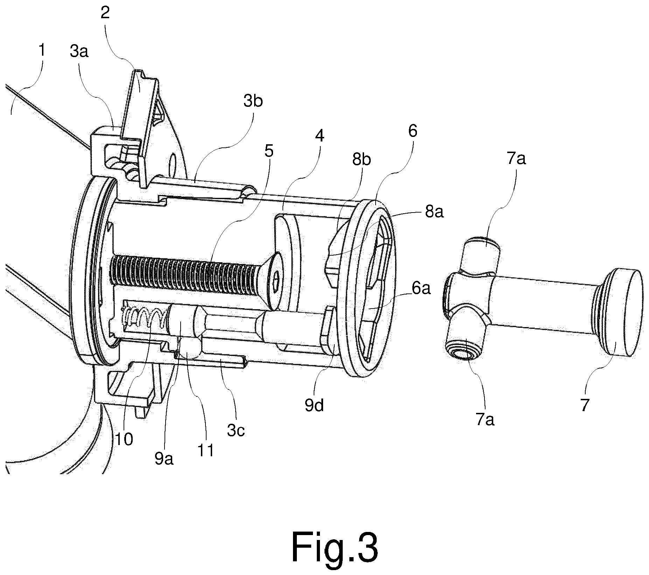

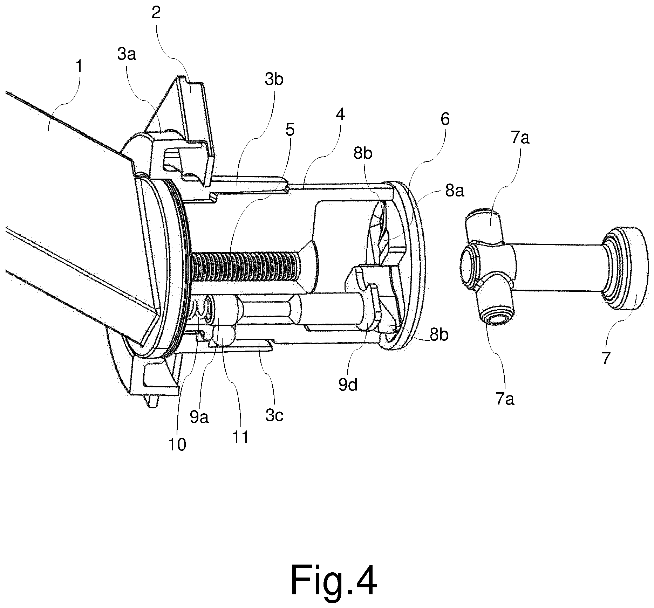

When the oven door is opened by turning handle 1 to the alignment position of opening 6a with the head of hook 7, which can thus disengage from the mandrel, spring 10 can push slider 9 against base 6 only when hole 4b comes into alignment with groove 3c (Figs.3, 4). In fact, in this position, the conical surface of the first portion 9a pushes ball 11 out of seat 4a so as to allow the movement of slider 9, until now blocked by ball 11, so that head 9d abuts on one of ramps 8. More specifically, head 9d abuts on seat 8a of ramp 8 and extends over the inclined plane 8b up to a position in front of opening 6a.

In this condition, the rotation of the mandrel body 4, and therefore of handle 1 integral thereto, is blocked by ball 11 which is lodged partly in the longitudinal groove 3c of the fixed bracket 3 and partly in hole 4b, and cannot re-enter seat 4a because the first portion 9a of slider 9 prevents it, so that opening 6a remains in the alignment position with the head of hook 7. When the head of hook 7 re-enters the mandrel, upon closing the door, it pushes with one of its arms 7a on head 9d of slider 9 so as to compress spring 10 and push back the first portion 9a, thus bringing the intermediate portion 9b in correspondence of hole 4b. This allows ball 11 to protrude back into seat 4a by disengaging from groove 3c, thus releasing the rotation of handle 1 so as to return to the closed position of Fig.2.

It is clear that the embodiment of the oven according to the invention described and illustrated above is just an example that is subject to numerous variations. In particular, the exact shape and arrangement of slider 9, ball 11 and the relative seats 3c, 4a and 4b can somewhat change as long as the general functionality described above is maintained. In addition, spring 10 could be replaced by an equivalent elastic element or integrated into slider 9.

## Claims

1. Cooking oven comprising a cooking chamber closed by a door on which there is rotatably mounted a handle (1) fixed to a cylindrical body (4) housed in a bracket (3) fixed on said door, the proximal end of said cylindrical body (4) being closed by a base (6) provided with a central opening (6a) configured to receive the head of a substantially T-shaped hook (7) which is fixed horizontally on the body of the oven, the distal face of said base (6) being provided with a helical cam located adjacent to said opening (6a) so as to be engaged by the head of said hook (7), **characterized in that** in the distal portion of the body (4) there is formed a longitudinal seat (4a) in which slides a slider (9) pushed elastically towards the base (6), and a locking ball (11) is arranged in a hole (4b) formed in correspondence of said seat (4a), said ball (11) being sized to protrude inside the seat (4a) until the rotation of the body (4) causes said hole (4b) to align with a longitudinal groove (3c) formed on the internal surface of said bracket (3) and having a depth such as to partially receive the ball (11) so that it no longer protrudes inside the seat (4a), said slider (9) being sized and shaped so as to have a distal portion (9a), which prevents the protrusion of the ball (11) into the seat (4a), an intermediate portion (9b), which allows the protrusion of the ball (11) into the seat (4a), and a proximal head (9d) which extends in front of the opening (6a) of the base (6) so as to be engaged by the head of the hook (7), said distal portion (9a) being located in correspondence of the hole (4b) when said proximal head (9d) is in abutment on the base (6) and the hook (7) is disengaged from the body (4), and said intermediate portion (9b) being located in correspondence of the hole (4b) when the head of the hook (7) is inside the body (4) and engages the proximal head (9d).

2. Oven according to claim 1, **characterized in that** the slider (9) is pushed elastically towards the base (6) by a spring (10) arranged between the bottom of the seat (4a) and the distal portion (9a).

3. Oven according to claim 1 or 2, **characterized in that** the proximal head (9d) extends in a transverse plane along an arc of about 90° centered on the longitudinal axis of the slider (9).

4. Oven according to any of the previous claims, **characterized in that** the helical cam consists of a pair of opposing ramps (8) each of which extends over an arc of about 90° and is provided with a seat (8a), at the end of an inclined plane (8b), in which it receives one of the arms (7a) of the head of the hook (7).

## Patentansprüche

1. Backofen, umfassend eine Garkammer, die von einer Tür mit einem drehbar montierten Türgriff (1) verschlossen wird, wobei der Türgriff (1) an einem zylinderförmigen Körper (4) befestigt ist, der in einer an der Tür festgelegten Halterung (3) aufgenommen ist, wobei das proximale Ende des besagten zylinderförmigen Körpers (4) durch eine mit einer mittigen Öffnung (6a) versehene Grundplatte (6) verschlossen ist, wobei die mittige Öffnung (6a) dazu ausgelegt ist, den Kopf eines substantiell T-förmigen, an dem Körper des Ofens horizontal befestigten Hakens (7) aufzunehmen, wobei die distale Seite der besagten Grundplatte (6) mit einem wendelförmigen, nahe bei der besagten Öffnung (6a) angeordneten Nocken versehen ist, an welchem der Kopf des besagten Hakens (7) anläuft, **dadurch gekennzeichnet, dass** in dem distalen Bereich des Gehäuses (4) eine in Längsrichtung verlaufende Aufnahme (4a) eingeformt ist, worin ein Schieber (9) gleitet, der elastisch in Richtung der Grundplatte (6) gedrückt wird, und dass eine Verriegelungskugel (11) in einem Loch (4b) angeordnet ist, das in Verbindung mit der besagten Aufnahme (4a) geformt ist, wobei die besagte Verriegelungskugel (11) derart dimensioniert ist, dass sie in die Aufnahme (4a) hineinragt, bis die Drehung des Körpers (4) das besagte Loch (4b) in eine Flucht mit einer in Längsrichtung verlaufenden Rille (3c) bringt, die an der Innenseite der besagten Halterung (3) ausgebildet ist und eine derartige Tiefe aufweist, dass sie die Kugel (11) zum Teil aufnimmt, damit diese nicht mehr nach in die Aufnahme (4a) hineinragt, wobei der besagte Schieber (9) hinsichtlich seiner Größe und Form derart ausgelegt ist, dass er aufweist: einen distalen Bereich (9a), welcher das Hineinragen der Kugel (11) in die Aufnahme (4a) verhindert, einen mittleren Bereich (9b), der das Hineinragen der Kugel (11) in die Aufnahme (4a) erlaubt, und einen proximalen Kopf (9d), der vor der Öffnung (6a) der Grundplatte (6) verläuft, um so durch die Spitze des Hakens (7) betätigt zu werden; wobei sich der besagte distale Bereich (9a) bei dem Loch (4b) befindet, wenn der besagte proximale Kopf (9d) an der Grundplatte (6) anliegt und der Haken (7) aus dem Körper (4) ausgehoben ist, und wobei sich der besagte mittlere Bereich (9b) bei dem Loch (4b) befindet, wenn der Kopf des Hakens (7) im inneren des Körpers (4) ist und den proximalen Kopf (9d) betätigt.

2. Ofen gemäß Anspruch 1, **dadurch gekennzeichnet, dass** der Schieber (9) von einer Feder (10), die sich zwischen dem Boden der Aufnahme (4a) und dem distalen Bereich (9a) befindet, elastisch in Richtung zu der Grundplatte (6) gedrückt wird.

3. Ofen gemäß Anspruch 1 oder 2, **dadurch gekennzeichnet, dass** sich der proximale Kopf (9d) innerhalb einer quer verlaufenden Ebene entlang eines Bogens von etwa 90° erstreckt, der an der Längsachse des Schiebers (9) zentriert ist.

4. Ofen gemäß einem der vorhergehenden Ansprüche, **dadurch gekennzeichnet, dass** der wendelförmige Nocken aus einem Paar von gegenüber liegenden Rampen (8) besteht, wobei jede davon sich über einen Bogen von etwa 90° erstreckt und am Ende einer geneigten Ebene (8b) mit einer Aufnahme (8a) versehen ist, um darin einen der Arme (7a) des Kopfs des Hakens (7) aufzunehmen.

## Revendications

1. Four de cuisson comprenant une chambre de cuisson fermée par une porte sur laquelle est montée en rotation une poignée (1) fixée sur un corps cylindrique (4) logé dans un support (3) fixé sur ladite porte, l'extrémité proximale dudit corps cylindrique (4) étant fermée par une base (6) prévue avec une ouverture centrale (6a) configurée pour recevoir la tête d'un crochet sensiblement en forme de T (7) qui est fixé horizontalement sur le corps du four, la face distale de ladite base (6) étant prévue avec une came hélicoïdale positionnée de manière adjacente à ladite ouverture (6a) afin d'être mise en prise par la tête dudit crochet (7), **caractérisé en ce que** dans la partie distale du corps (4), on forme un siège longitudinal (4a) dans lequel coulisse un coulisseau (9) poussé élastiquement vers la base (6), et une bille de blocage (11) est agencée dans un trou (4b) formé en correspondance dudit siège (4a), ladite bille (11) étant dimensionnée pour faire saillie à l'intérieur du siège (4a) jusqu'à ce que la rotation du corps (4) provoque l'alignement dudit trou (4b) avec une rainure longitudinale (3c) formée sur la surface interne dudit support (3) et ayant une profondeur afin de recevoir partiellement la bille (11) de sorte qu'elle ne fait plus saillie à l'intérieur du siège (4a), ledit coulisseau (9) étant dimensionné et formé afin d'avoir une partie distale (9a) qui empêche la saillie de la bille (11) dans le siège (4a), une partie intermédiaire (9b) qui permet la saillie de la bille (11) dans le siège (4a), et une tête proximale (9d) qui s'étend en face de l'ouverture (6a) de la base (6) afin d'être mise en prise par la tête du crochet (7), ladite partie distale (9a) étant positionnée en correspondance du trou (4b) lorsque ladite tête proximale (9d) est en butée sur la base (6) et le crochet (7) est dégagé du corps (4), et ladite partie intermédiaire (9b) étant positionnée en correspondance du trou (4b) lorsque la tête du crochet (7) est à l'intérieur du corps (4) et met en prise la tête proximale (9d).

2. Four selon la revendication 1, **caractérisé en ce que** le coulisseau (9) est poussé élastiquement vers la base (6) par un ressort (10) agencé entre le fond du siège (4a) et la partie distale (9a).

3. Four selon la revendication 1 ou 2, **caractérisé en ce que** la tête proximale (9d) s'étend dans un plan transversal le long d'un arc d'environ 90° centré sur l'axe longitudinal du coulisseau (9).

4. Four selon l'une quelconque des revendications précédentes, **caractérisé en ce que** la came hélicoïdale se compose d'une paire de rampes (8) opposées dont chacune s'étend sur un arc d'environ 90° et est prévue avec un siège (8a), à l'extrémité d'un plan incliné (8b), dans laquelle elle reçoit l'un des bras (7a) de la tête du crochet (7).
